# EUROPEAN PATENT APPLICATION

(11) **EP 4 765 488 A1**
(43) Date of publication of application: **24.06.2026**
(21) Application number: 25225867.8
(22) Date of filing: 19.12.2025
(51) Int. Cl.: H01Q 1/32, H01Q 5/335, H01Q 9/42

(54) **METHOD FOR FINE-TUNING THE PERFOMANCE OF A FOLDED MONOPOLE ANTENNA FIXED IN A VEHICLE**

(30) Priority: 20.12.2024 IT 202400029412
(71) Applicant: FERRARI S.p.A., 41100 Modena (IT)
(72) Inventor: CASOLI, Luca, 41100 Modena (IT)
(74) Representative: Studio Torta S.p.A.

(57) **Abstract**

A method for fine-tuning the performance of an antenna of the folded monopole type fixed within a vehicle (1), the antenna (5) having a support body (6), which is substantially flat and is arranged between a chassis (3) and a body (4) of the vehicle (1), and a conducting element (7), which is folded a plurality of times along the support body (6), and being characterized by nominal values of a plurality of performance parameters. According to such method, after having mounted the antenna (5) in the vehicle (1), one or more of the performance parameters are measured, the measured values are compared with the corresponding nominal values to identify any deviations between the measured values and the nominal values, at least one pad (13-16) of dielectric or magnetic or mixed dielectric-magnetic material is attached in at least one respective position of the antenna (5), such position being determined by deviations between the measured values and the corresponding nominal values.

## Description

### Cross-reference to related applications

This patent application claims priority from Italian patent application no. 102024000029412 filed on December 20, 2024, the entire disclosure of which is incorporated herein by reference.

### Technical field

The present invention relates to a method for fine-tuning the performance of an antenna of the folded monopole type fixed within a vehicle.

In particular, the present invention is advantageously, but not exclusively, applied in a modern car made of parts of different materials and comprising a large quantity of electrical and electronic components, to which the following description will explicitly refer without thereby losing generality.

### Background

As is known, almost every car comprises as standard an audio system provided with a radio system for the reception of radio transmissions. The radio system comprises a radio receiver operating according to one of several commercial radio signal modulation standards, for example AM, FM, DAB or SDARS, and one or more antennas connected to the radio receiver.

The antennas installed on cars must have certain performance but also meet certain aesthetic criteria. In other words, in addition to guaranteeing certain electromagnetic performance, the antennas must integrate with the aesthetics of the car. Some examples of such antennas are the so-called shark fin antenna, screen monopole antenna and foil monopole antenna: the first type is mounted on the roof of the car, and therefore is visible, while the second type is integrated in the windscreen and the third type is typically housed in a bumper or above a fender. Therefore, for obvious aesthetic reasons, on the most modern sports cars, screen monopole antennas and foil monopole antennas are often mounted, that is, two types of antennas that remain hidden, therefore they do not impact the aesthetics of the car.

The most technologically advanced cars comprise numerous electrical and electronic devices connected to one another through numerous electric wirings that produce a non-negligible electromagnetic noise that disturbs the antenna mounted within the car. The electromagnetic noise increases considerably in electrically powered cars. Therefore, it is very likely that the antenna, once mounted in the car, will no longer have the nominal performance, in terms of input impedance, bandwidth and directivity, defined at the design level.

There are electromagnetic simulation computer systems that allow designing the antenna as if it were already installed in the car. However, these computer systems are not precise enough to consider all the real situations that can occur inside a complex car from the electrical and electronic point of view. There are also adjustable circuit tuners that can be integrated in the antenna circuit. However, the known circuit tuners allow only some antenna performance parameters to be adjusted.

### Summary

The object of the present invention is to provide a method for tuning the performance of an antenna after the latter has been mounted on the car, which method overcomes the drawbacks described above and, at the same time, is easy and cost-effective to manufacture.

In accordance with the present invention, a method is provided for fine-tuning the performance of an antenna of the folded monopole type mounted within a vehicle and a vehicle, as defined in the appended claims.

The claims describe preferred embodiments of the present invention to be considered an integral part of the present description.

### Brief description of the drawings

The present invention will now be described with reference to the accompanying drawings, which illustrate a non-limiting embodiment example thereof, wherein:
- Figure 1 illustrates a part of a vehicle with parts removed in which a folded monopole antenna mounted on the vehicle is visible;
- Figure 2 illustrates in greater detail the folded monopole antenna after the method has been carried out for fine-tuning the antenna performance of the present invention;
- Figure 3 illustrates a simplified model of folded monopole antenna used to verify, by means of simulations, the effectiveness of the method of the present invention;
- Figure 4 illustrates the antenna model of Figure 3 with different positions of a dielectric element applied to the antenna to modify the performance thereof during the aforesaid simulations;
- Figures 5 to 8 are graphs of return loss as the frequency varies, obtained by means of simulations, each of the graphs comparing the nominal performance of the antenna model of Figure 3 with the performance modified by the presence of a dielectric element in the positions illustrated in Figure 4.

### Description of embodiments

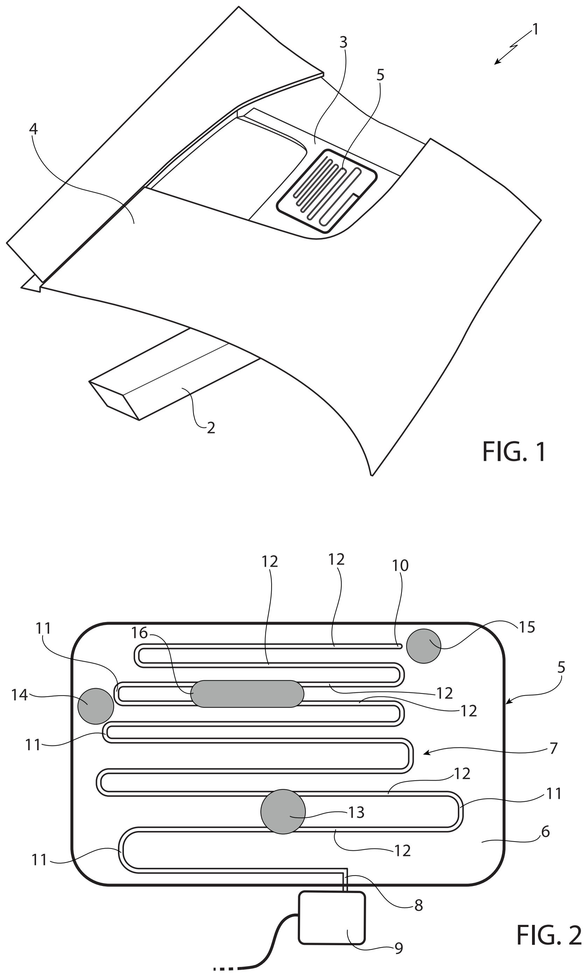

Figure 1 illustrates a portion of a vehicle, generically indicated with reference numeral 1, and in particular a central side portion of a car, for example a sports car, from which some parts have been removed for clarity. In particular, in Figure 1 the following parts of the vehicle 1 are visible: a main chassis 2 made of aluminium, a secondary chassis 3, which is made of composite material and is integral with the main chassis 2, a side body portion 4, which is made of carbon or composite material and covers the secondary chassis 3, and an antenna 5 of the folded monopole type fixed within the vehicle 1, and in particular on the secondary chassis 3. In this manner, the antenna 5 remains hidden under the side body portion 4. In Figure 1 a part of the body portion 4 above the secondary chassis 3 is removed for the sole purpose of illustrating the placement of the antenna 5. The antenna 5 of folded monopole type is advantageous with respect to a simple monopole antenna: it is more compact, provides a reduced input impedance and in any case controllable by the number of folds and provides a greater bandwidth.

With reference to Figure 2, the antenna 5 comprises a support body 6, which is substantially flat, is flexible and is fixed on the secondary chassis 3 by means of adhesive, and therefore is arranged between the secondary chassis 3 and the body portion 4, and a conducting element 7, which is folded a plurality of times along the support body 6. For example, the conducting element 7 is made of copper. The conducting element 7 comprises a connecting end 8, which is electrically connected to a radio receiver (not illustrated) of a radio system of the vehicle 1, through a passive filter 9, and a second tail end 10. From the connecting end 8 to the tail end 10, the conducting element 7 is folded a plurality of times so as to have a plurality of folds 11 and a plurality of straight segments 12 parallel to each other.

The antenna 5 is characterized by nominal values of a plurality of performance parameters. For example, the performance parameters comprise input impedance, frequency band, and in particular frequency centre band and bandwidth, and directivity.

The method of the present invention entails measuring one or more of said performance parameters of the antenna 5 with the same already fixed in the vehicle 1. The measured values are compared with the corresponding nominal values to identify any deviations between the measured values and the corresponding nominal values beyond relative margins.

At this point, the method entails attaching one or more elements, for example in the form of circular or polygonal pads or tablets, made of dielectric or magnetic/conductive or mixed dielectric-magnetic material in one or more respective positions of the antenna 5 near folds 11 or segments 12. Such positions are determined by deviations between the measured values and the corresponding nominal values.

Figure 2 shows examples of pads, indicated with 13, 14, 15 and 16, and application points thereof. Each pad 13, 14, 15, 16, varies the electrical capacity between those segments 12 of the conducting element 7 near to which the pad is attached and such variation in capacity has the effect of varying at least some of the performance parameters of the antenna 5.

Therefore, by selecting the number and positions of the pads, it is possible to fine-tune the actual value of one or more of the performance parameters of the antenna 5, for the purpose of bringing them back towards the respective nominal values. The shape, size and specific material of the pads also have an effect on the performance parameters.

Preferably, each tablet has a circular or closed polygonal or oblong shape.

In particular, in the example illustrated by Figure 2: the pad 13 has a circular shape and is positioned between two segments 12 adjacent to each other and close to the connecting end 8; the pad 14 has a circular shape and is arranged between two folds 11 adjacent to each other and closer, in terms of the number of folds, to the tail end 10; the pad 15 has a circular shape and is arranged at the tail end 10; the pad 16 has an oblong shape and is arranged between two segments 12 which are closer, in terms of the number of folds, to the tail end 10, parallel to the segments 12.

Preferably, each pad 13, 14, 15 has a larger diameter between a maximum distance between two segments 12 adjacent to each other and twice said maximum distance. The pad 16 has a width between said maximum distance and twice said maximum distance. Thanks to the aforesaid dimensions, each pad 13, 14, 15, 16 can overlap the two segments 12 between which it is arranged.

According to an embodiment not illustrated, the pads have a closed polygonal shape. The width or diagonal of such closed polygonal shape is between said maximum distance and twice said maximum distance.

The material of the pads 13-16 has a relative permittivity between 5 and 8, and in particular between 6 and 7. For example, the material of the pads 13-16 comprises ceramics and/or silicon nitride. Such materials provide a relative permittivity between 6 and 7, a high hardness and wear resistance, a high electrical resistivity and a low dielectric loss.

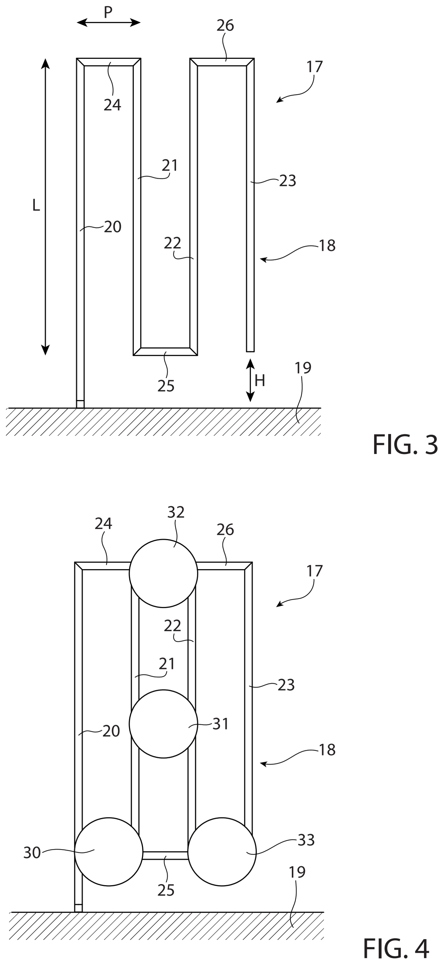

Figure 3 illustrates a simplified model of a folded monopole antenna used to verify, by means of electromagnetic simulations, the effectiveness of the method with respect to some of the performance parameters. The antenna model, indicated with 17 in Figure 4, comprises a copper conducting element 18 folded three times and positioned on a ground plane 19. The conducting element 18 comprises a segment 20 projecting from the ground plane 19 and which is connected to a receiving connector (not illustrated), two central segments 21 and 22, a last segment 23 terminating with the tail end. The four segments 20-23 are interspersed with a first fold 24, a second fold 25 and a third fold 26, all three having a square shape.

The section of the conducting element 18 is equal to 1 mm². The width P of each fold 24-26 is equal to 15 mm. The length L of each segment 20-23 is equal to 90 mm. The distance H of the segments 20-23 from the ground plane 19 is equal to 15 mm. The antenna model 17 therefore has a frequency band substantially centred on a frequency of 700 MHz.

Figure 4 illustrates the antenna model 17 comprising four examples of positions of a circular pad of dielectric material, such positions being indicated respectively with 30, 31, 32 and 33. The position 30 is between the segment 20 and the nearest fold 24. The position 31 is central between the two segments 21 and 22. The position 32 is central between the folds 24 and 26. The position 33 is between the central fold 25 and the last segment 23. The pad has a diameter of 18 mm and a thickness of 5 mm. The dielectric material of the pad is modelled with a relative permittivity of 6.8 and with a density such as to give the pads a weight of 3 g.

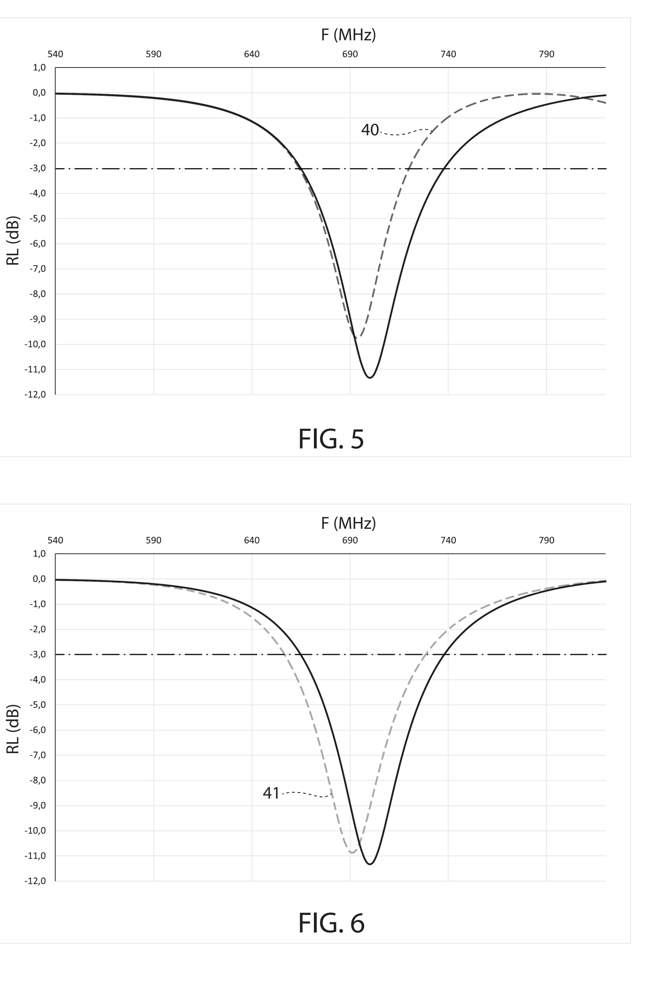

Figures 5 to 8 are graphs expressing the return loss (RL), expressed in dB, as the frequency (F) varies, expressed in MHz, of the antenna model 17 without and with the pad in the positions 30-31 and which are obtained by means of electromagnetic simulations. The simulations were performed by means of a simulation software known as Ansys.

In particular, each Figure 5, 6, 7, 8 compares the return loss of the antenna model 17 without a pad (solid line) with the return loss of the antenna model 17 comprising the pad in the respective positions 30, 31, 32, 33, represented with a dashed line indicated with 40, 41, 42, 43. The return loss is a parameter that provides an indication of the gain of the antenna: the more the return loss peak is negative, the more effective the antenna is. The bandwidth is evaluated at a reduction of 3 dB from the maximum return loss value, which is equal to 0 dB.

With reference to Figure 5, the pad in the position 30 produces a bandwidth narrowing of about 20 MHz, a reduction of the band centre of about 10 MHz and a reduction of the return loss peak (in absolute value) of almost 2 dB.

With reference to Figure 6, the pad in the position 31 produces a substantial shift of the frequency band, and in particular a reduction of the band centre, of about 11 MHz, without modifying the bandwidth, and a minimum reduction of the peak of about 0.5 dB.

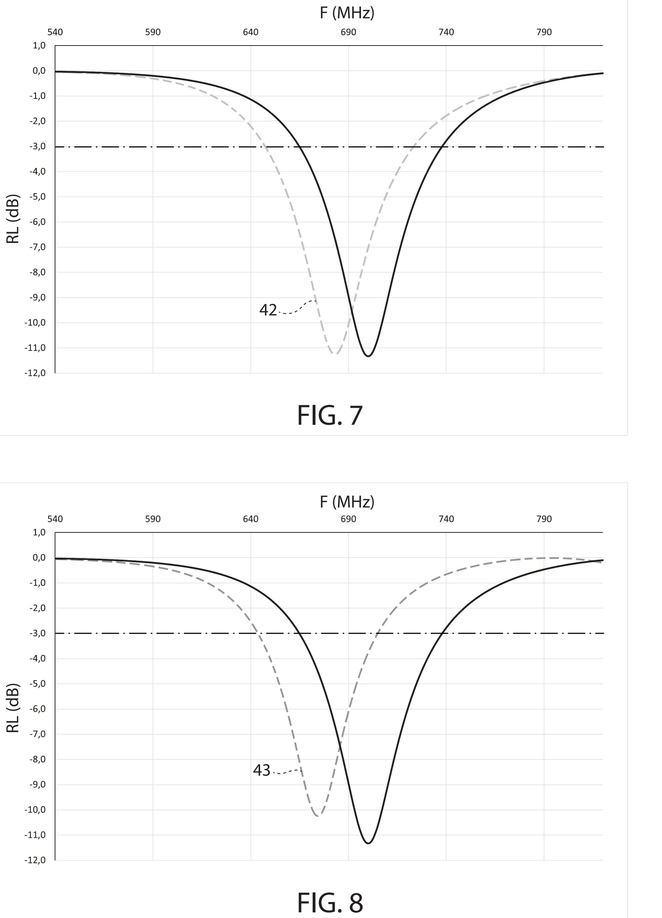

With reference to Figure 7, the pad in the position 32 produces a shift of the frequency band, and in particular a reduction of the band centre, of about 20 MHz and a widening of the bandwidth of about 4 MHz. The return loss peak is substantially unchanged.

With reference to Figure 8, the pad in the position 33 produces a shift of the frequency band, and in particular a reduction of the band centre, of about 28 MHz, a widening of the bandwidth of about 12 MHz and reduction of the return loss peak (in absolute value) of about 1 dB.

As evidenced by the graphs of Figures 5 to 8, varying the position of a circular pad of dielectric material along a folded monopole antenna produces a variation in antenna performance at least in terms of bandwidth, band centre and gain. Therefore, if the fixing of the antenna 5 in the vehicle 1 produces a variation in the frequency band with respect to the nominal conditions, it is possible to tune the frequency band to bring it closer to the nominal conditions by applying a pad in a certain position according to deviations between the measured values and the nominal values of the frequency band (i.e. the bandwidth and band centre frequency values).

It can be shown that by positioning several pads in certain positions, not necessarily the positions 30-31 of

Figure 4, and by varying the material with which they are made, for example by using a magnetic/conductive or mixed dielectric/conductive material, the directivity of a folded monopole antenna can also be tuned.

Therefore, given the antenna 5, it is possible to predetermine, by means of simulations, all the positions on the antenna 5 in which to apply one or more pads of dielectric or magnetic/conductive or mixed dielectric-magnetic material to obtain certain tunings of the performance parameters. Once the deviations of the performance parameters of the antenna 5 fixed in the vehicle 1 with respect to the nominal parameters of the antenna have been measured, the position or positions in which to apply the pad(s) to obtain the desired tuning will be selected.

The main advantage of the method described above and of the vehicle 1 comprising the antenna 5 tuned according to such method is to fine-tune any performance parameter of the antenna 5 without having to integrate specific tuning circuits in the radio system of the vehicle 1. In particular, such tuning can be done by applying pads of dielectric and/or magnetic material in suitable positions of the antenna 5 when it is already fixed in the vehicle 1, such pads being relatively simple to produce and resistant to wear and stresses transmitted by the vehicle 1. Furthermore, the antenna 5 tuned according to the method is fixable within the vehicle 1 so as to remain invisible and therefore not impact the aesthetics and style of the body of the vehicle 1.

## Claims

1. A method for fine-tuning the performance of an antenna of the folded monopole type fixed within a vehicle, particularly a car, the antenna (5) comprising a support body (6), which is substantially flat and is arranged between a chassis (3) and a body (4) of the vehicle (1), and a conducting element (7), which is folded a plurality of times along the support body (6), the antenna (5) being **characterized by** nominal values of a plurality of performance parameters; the method comprising:
- after fixing the antenna (5) in the vehicle (1), measuring one or more of said performance parameters;
- comparing the measured values with the corresponding nominal values to identify any deviations between the measured values and the corresponding nominal values beyond relative margins; and
- attaching at least one element (13-16) of dielectric or magnetic/conductive or mixed dielectric-magnetic material to at least one respective position of the antenna (5), such position being determined by deviations between measured values and corresponding nominal values.

2. The method according to claim 1, wherein said performance parameters comprise input impedance, frequency band and directivity.

3. The method according to claim 1 or 2, wherein said conducting element (7) comprises a connecting end (8), which is electrically connected to a radio receiver of the vehicle (1), and a tail end (10) and is folded a plurality of times so as to have a plurality of folds (11) and a plurality of segments (12) parallel to each other; said at least one respective position of the antenna (5) being selected from a group comprising at least one fold position (11), at least one position between two segments (12) adjacent to each other, and at least one position at the tail end (10).

4. The method according to any one of claims 1 to 3, wherein the material of said at least one element (13-16) has a relative permittivity between 5 and 8, and in particular between 6 and 7.

5. The method according to any one of claims 1 to 3, wherein the material of said at least one element (13-16) comprises ceramics and/or silicon nitride.

6. The method according to any one of claims 1 to 5, wherein said at least one element is a pad (13-16) or tablet having a circular shape having a certain diameter, or a closed polygonal shape having a certain diagonal or a certain width, or an oblong shape having a certain width; preferably, said diameter or said diagonal or said width being between a maximum distance between two segments (12) adjacent to each other and twice said maximum distance.

7. A vehicle, particularly a car, comprising a chassis (3), a body (4), a radio receiver and an antenna (5) of the folded monopole type, the antenna (5) being connected to the radio receiver and comprising a support body (6), which is substantially flat and is arranged between the chassis (3) and the body (4), and a conducting element (7), which is folded a plurality of times along the support body (6), the antenna (5) being **characterized by** nominal values of a plurality of performance parameters, the performance of the antenna (5) being finely tuned by the method according to any one of claims 1 to 6.

8. A vehicle, in particular a car, comprising a chassis (3), a body (4), a radio receiver and an antenna (5) of the folded monopole type, the antenna (5) being connected to the radio receiver and comprising a support body (6), which is substantially flat and is arranged between the chassis (3) and the body (4), a conducting element (7), which is folded a plurality of times along the support body (6), and at least one element (13-16) of dielectric or magnetic/conductive or mixed dielectric-magnetic material attached in at least one respective position of the antenna (5).

9. The vehicle according to claim 8, wherein said conducting element (7) comprises a connecting end (8), which is electrically connected to the radio receiver, and a tail end (10), and is folded a plurality of times so as to have a plurality of folds (11) and a plurality of segments (12) parallel to each other; said at least one respective position of the antenna (5) being selected from a group comprising at least one fold position (11), at least one position between two segments (12) adjacent to each other, and at least one position at the tail end (10).
